# EUROPEAN PATENT SPECIFICATION

(11) **EP 1 716 768 B1**
(45) Date of publication and mention of the grant of the patent: **08.07.2009**
(21) Application number: 05103342.1
(22) Date of filing: 25.04.2005
(51) Int. Cl.: A23L 2/52, C08B 30/00

(54) **Extended energy beverages**
Getränk mit verlängerter Energiewirkung
Boissons donnant de l'énergie à long terme

(43) Date of publication of application: 02.11.2006
(73) Proprietor: Nestec S.A., 1800 Vevey (CH)
(72) Inventor: Jolly-Zarrouk, Laure Marie-Thérèse Brigitte, 75011 Paris (FR); Fischer, Ann Monica, 1073 Savigny (CH); Merinat, Sylvie Joëlle, 1083 Mezieres (CH); Robin, Frédéric, 1012 Chailly/Lausanne (CH); Lehmann, Undine, 1012 Lausanne (CH)
(74) Representative: Cogniat, Eric Jean Marie

(56) References cited:
- WO-A-00/73352
- WO-A-20/04023891
- US-A- 5 989 350
- ANDERSON A K ET AL: "Digestibility and pasting properties of rice starch heat-moisture treated at the melting temperature (Tm)." STARCH/STAERKE 54 (9) DEP. OF FOOD & NUTR., UNIV. OF WISCONSIN-STOUT, MENOMONIE, WI 54751, USA. TEL. +1 715 232 1175. FAX +1 715 232 2317. E-MAIL ANDERSONALF(A)UWSTOUT.EDU, 2002, pages 401-409, XP002346937

## Description

This invention relates to the use of heat moisture treated starch to prepare extended energy beverages, preferably malted beverages

Starches are polymers of glucose. The simplest type of starch is amylose which consists of a straight chain of glucose molecules with glycoside links between the first carbon atom of one glucose unit and the fourth carbon atom of the next. Another type of starch called amylopectin has a branched structure. Starches are the storage carbohydrates of plants and the relative amounts of amylose and amylopectin differ in starches from different sources as do the sizes of the starch molecules themselves. When starches are eaten, they are digested by the action of a group of enzymes called amylases which hydrolyse the starch. Uncooked starch is resistant to the action of the amylase enzymes but the process of cooking swells the starch granules resulting in a gel on which amylase can act. However, as cooked starch cools, a proportion undergoes crystallization to a form that is again resistant to amylase action.

Recent studies have shown that plasma glucose and insulin responses vary with the type and physical form of starch-containing foods ingested. It is believed that this effect is related to the differences in the rate of digestion of these different types and forms of starch containing foods. It follows that the use of foods containing different types of starch may be of interest in the control of diabetes and obesity by moderating the increase in blood glucose levels after eating. Further, such foods could have application in healthy persons interested in satiety management and they may also be of interest to individuals such as sportsmen requiring sources of sustained energy, particularly in foods which can easily be consumed "on the go" away from home.

It has already been proposed to exploit the relationship between structure and digestibility of starches with the object of producing modified starches that are digested more slowly than conventionally cooked starches. Such modified starches are known as slowly digestible starches or SDS. For example, US Patent Application 2003/0161861 describes solid cereal products such as biscuits or crackers having an SDS content relative to the total starch content higher than about 12 wt %, preferably higher than about 20 wt %. These cereal products are not, however, supplemented with a specially prepared SDS but rather the patent application relates to the use of food products which inherently contain the desired quantity of SDS. EP 1 362 517 describes a SDS produced by enzymatic debranching of low amylose starches. This SDS is stated to be suitable for use in beverages but unfortunately it has been found that it does not survive the heat treatments that are conventionally used in the preparation of both ready to drink beverages and beverage powders.

EP 388 319 and 465 363 describe SDS produced by reacting a farinaceous substance with a fatty acid compound such that enzymatic action is inhibited. The SDS thus produced are used to make noodles, bread, cakes and the like food products.

WO 03/105605 relates to the use of pullulan as an SDS. According to this document, pullulan is a water soluble, viscous polysaccharide consisting of units of three α-1,4 linked glucose molecules that are repeatedly polymerized by α-1,6 linkages on the terminal glucose molecule. Pullulan is elaborated extracellularly by a specific strain of black yeast, *Aureobasiidium pullulans*. Typical food starches such as corn starch contain a proportion of amylopectin which also has both α-1,4 and α-1,6 linkages. For pullulan, however, the α-1,6 linkages serve to extensively cross-link individual short chains. Leading to a specific structure which is not easily digested and which contributed to the previous reputation of pullulan as an indigestible polysaccharide.

WO-A-2004/023891 describes slowly digestible carbohydrates with a backbone having at least 5% α-1,6-D-glucopyranosidic linkages for food and drink compositions.

However, to the Applicant's knowledge, no SDS based on widely available food grade materials have been specifically designed for use in beverage products having regard to the specific requirements of this type of product and a need thus exists for alternative types of SDS, particularly those stable to thermal processing.

US Patent No. 5,989,350 describes a heat moisture treated starch with a high degree of viscous stability suitable for use as a thickener or gelling agent. Other heat moisture treated starches are known for this purpose.

Starch/Stärke 54 (2002) 401-409 (Anderson et al) describes the digestibility and pasting properties of rice starch heat moisture treated at the melting temperature.

It has now surprisingly been found that, in addition to the properties that make them suitable for use as thickeners in processed foods, heat moisture treated starches also have a reduced rate of digestibility compared to untreated cooked starches and thus that they are suitable for use in applications where an SDS is required. However, heat moisture treated starches have the additional unexpected benefit when compared with other types of SDS such as those produced by enzymatic hydrolysis that they are stable to further thermal processing of the type typically used in the food industry such as pasteurization, sterilization and UHT treatments.

Accordingly, the present invention provides the use of a heat moisture treated starch to reduce the rate of digestibility of a beverage so as to increase the period of time over which the beverage supplies energy to an individual who has consumed it, wherein the heat moisture treated starch is produced by mixing a starch and water in an amount to provide a mixture with a water content between 15 and 35% by weight and heat treating the mixture at a temperature between 95 and 135°C.

The invention further extends to an extended energy beverage which is supplemented with heat moisture treated starch such that the beverage contains from 1.5 to 15 times as much slowly digestible starch as is conventionally found in an unsupplemented beverage of that type, wherein the heat moisture treated starch is produced by mixing a starch and water in an amount to provide a mixture with a water content between 15 and 35% by weight and heat treating the mixture at a temperature between 95 and 135°C.

In this specification:-

The term "slowly digestible starch" or "SDS" is used to designate that starch which is digested between 20 minutes and 4 hours after ingestion according to the technique of Englyst et el (European Journal of Clinical Nutrition, 46: S33-S50 (1992)).

The term "extended-energy beverage," designates a beverage that takes longer to digest than an isocaloric conventional beverage of the same type. For example, an extended-energy beverage including heat-moisture treated starches according to the invention should provide energy for at least about 10 percent, preferably at least about 25 percent, and more preferably at least about 50 percent, more time than the same quantity of a conventional beverage of the same type.

The beverage of the invention may be a juice beverage optionally containing fruit pulp, a dairy beverage based, for example, on yoghurt, a soy milk beverage, a malted beverage, a chocolate beverage, or a combination thereof.

Just as a beverage of the invention can provide extended-energy when compared with an isocaloric conventional beverage, equally it will be appreciated that a beverage of the invention may generate a feeling of satiety for the a similar period of time to a conventional beverage with a higher calorie content. Thus, the beverages of the invention can be employed to provide a method of reducing daily caloric intake.

It will be appreciated that the invention relates not only to ready-to-drink beverages but also to beverage powders which may be reconstituted by the addition of water, milk or other liquid to create an extended energy beverage which contains from 1.5 to 15 times as much slowly digestible starch as is conventionally found in an unsupplemented beverage of that type. The amount of liquid required to maintain the solids content (i.e. any insoluble ingredients in the beverage powder) dispersed throughout the beverage will vary depending on the exact nature of the heat-moisture treated starch component and the beverage component, as will be appreciated and readily determined by those of ordinary skill in the art. The amount of liquid will typically be at least about 40 weight percent to about 95 weight percent, preferably from about 50 weight percent to about 90 weight percent. Typically, 20 to 24 grams of the beverage powder will be mixed with 200 ml of water, creamer, milk, yoghurt, juice or the like.

Reconstitutable beverages of the invention have the added advantage that athletes and recreational sportsmen and women such as mountain climbers, skiers, fishermen, golfers, and the like, can more readily transport the reconstitutable beverage and add liquid at a remote location away from a typical eating area, e.g., water for example from a lake or river or other source of potable water such as a water fountain can be added to reconstitute the beverage on a mountain, ski slope, on a fishing boat or on a golf course.

It is also possible to use liquid concentrates for the reconstitutable beverages, which permit less water or other liquid beverage component to be added upon reconstitution while still facilitating proper dispersion of the solids into the liquid to form the beverage. When liquid concentrates are used as the reconstitutable beverage, it is typical that the water content is less than about 50 percent of the water present in a ready-to-drink beverage of the invention.

The extended energy beverage of the invention may contain from 5 to 20 % (dry weight basis) of a heat-moisture treated starch. It will be appreciated that the heat moisture treated starch may replace some of the carbohydrate conventionally found in a beverage of the type concerned. For example, in a beverage powder such as the malted beverage sold under the trade mark MILO ®, a portion of the carbohydrate usually used may be replaced by heat moisture treated starch. Alternatively, the heat moisture treated starch may simply be added to the beverage. For example, orange juice naturally has a low content of SDS and an extended energy orange juice drink may be provided by simply adding a suitable quantity of heat moisture treated starch to orange juice.

Thus, an extended energy beverage according to the invention may be prepared by adding an appropriate quantity of heat moisture treated starch to a beverage powder and then reconstituting the beverage in the usual way, or by adding the heat moisture treated starch to the beverage itself. In either case, the heat moisture treated starch may be a simple addition or it may be used to replace some of the starch that would be used to make a conventional beverage of the type in question.

Preferred types of starch for use in the present invention include potato, tapioca, maize (corn), rice, sorghum, waxy maize, waxy rice, or any combination thereof. The amylose content of the starch can be up to about 70 % by weight, preferably from 0.1 to 30 % by weight.

The starch is heat moisture treated by mixing the selected starch with sufficient water to provide the mixture with a water content of from 15 to 35 % by weight, preferably from 20 to 35 % by weight. Without being bound by theory, it is believed that the restriction of the water content facilitates treatment of the starch granules without destroying or irrevocably altering the starch granules in a manner that breaks down their structure. It is believed that, as a result, the starch retains its general structure but becomes more crystalline in nature and therefore more difficult to digest. The starch and water are treated at temperatures of from 95°C to 130°C, preferably from 100°C to 110°C, typically for a time of about 10 to 90 minutes, preferably about 20 to 60 minutes. Preferably, the heat-moisture treatment is accomplished in equipment capable of agitating the mixture, for example a VOMM Turboreactor (commercially available from VOMM Impianti e Processi of Milano, Italy). Additional and more detailed guidance on suitable methods of heat-moisture treatment, as well as the resultant heat-moisture treated starches, are described in U.S. Patent No. 5,989,350, which is hereby incorporated herein by express reference.

### EXAMPLES

The following examples are not intended to limit the scope of the invention, but merely to illustrate representative possibilities concerning the present invention.

### Example 1

Heat-moisture treated ("HMT") starches, were prepared according to the general principles disclosed in US Patent No. 5,989,350. Native potato starch was mixed with sufficient water to produce a mixture with a water content of 32%. 0.35% by weight of emulsifier was added and the mixture was heated to 105°C under rotation at 400 rpm. The digestibility profiles of this HMT starch, commercially available maltodextrin (a rapidly digestible sugar) and a native potato starch were examined by using an *in-vitro* digestion method that is designed to mimic human gastro-intestinal digestion conditions according to Englyst et al. Briefly, 500mg samples of each material were weighted in 50ml centrifuge tubes. After an initial treatment with pepsin in hydrochloric acid at pH1, the samples were incubated with a mixture of enzymes (amylase, invertase and amyloglucosidase) under controlled conditions of pH, temperature, viscosity and mechanical mixing. Aliquots were taken at 20 minutes, 60 minutes, 120 minutes and 240 minutes after the start of the hydrolysis. The amount of glucose released was measured using a GOPOD kit from Megazyme (detection based on a colorimetric enzymatic reaction). The amount of starchy material and sucrose digested was calculated from the amount of glucose measured corrected by a factor of 0.9. The amount of SDS was calculated as follows. The amount of glucose digested after 20 minutes was subtracted from the amount digested after 60 minutes to give a value SDS1*. The amount of glucose released after 60 minutes was subtracted from the amount released after 240 minutes to give a value SDS2*. The total SDS is the sum of SDS1* and SDS2*. The HMT starch had a significantly higher SDS content than the other two materials tested. The HMT starch contained 32% SDS compared with 12% and 15% for maltodextrin and potato starch respectively.

### Examples 2 to 5 and Comparative Examples 2 to 5

Four conventional beverage products were obtained or prepared and tested to determine the level of slowly-digestible starches contained therein (Comparative Examples 2 to 5). The HMT starch of Example 1 was then added to each beverage, which significantly increased the amount of SDS within the products (Examples 2-5). The results are shown in Table I below.

| Example/Comp. Example | Product Formulation | SDS (% wt of total carbohydrates | % Increase (%) |
|---|---|---|---|
| Comp. Ex. 2 | MILO® beverage | 7.1 | -- |
| Ex. 2 | MILO® beverage + 20% heat-moisture treated starch | 13.1 | 85% |
| Comp. Ex. 3 | NESQUICK® beverage | 1.5 | -- |
| Ex. 3 | NESQUICK® beverage + heat-moisture treated starch | 6.4 | 330% |
| Comp. Ex. 4 | Orange Juice | 0.6 | -- |
| Ex. 4 | Orange juice + heat-moisture treated starch | 8 | 1230% |
| Comp. Ex. 5 | MIGROS® strawberry yoghurt drink | 2.1 | -- |
| Ex. 5 | MIGROS® drink + heat-moisture treated starch | 19.2 | 810% |

## Claims

1. Use of a heat moisture treated starch to reduce the rate of digestibility of a beverage so as to increase the period of time over which the beverage supplies energy to an individual who has consumed it, wherein the heat moisture treated starch is produced by mixing a starch and water in an amount to provide a mixture with a water content between 15 and 35% by weight and heat treating the mixture at a temperature between 95 and 130°C.

2. The use of Claim 1 in which the beverage contains from 5 to 20% by weight of the dry components of heat moisture treated starch.

3. The use of Claim 1 or 2, wherein the heat moisture treated starch is produced by heat treating the mixture at a temperature between 100°C and 110°C.

4. The use of Claim 3 wherein the mixture is rotated at between 400 and 535 revolutions per minute during the heat treatment.

5. The use of Claim 3 or 4 wherein the mixture further includes an emulsifier in an amount of from 0.2 to 1% of the dry weight of the starch.

6. An extended energy beverage which is supplemented with heat moisture treated starch such that the beverage contains from 1.5 to 15 times as much slowly digestible starch as is conventionally found in an unsupplemented beverage of that type, wherein the heat moisture treated starch is produced by mixing a starch and water in an amount to provide a mixture with a water content between 15 and 35% by weight and heat treating the mixture at a temperature between 95 and 130°C.

7. A beverage as claimed in Claim 6 which is a soy milk beverage, a malted beverage, a chocolate beverage, a fruit juice beverage, a dairy beverage or a mixture thereof.

## Patentansprüche

1. Verwendung einer Wärme-Feuchtigkeits-behandelten Stärke zur Verminderung der Verdaulichkeitsrate eines Getränks, um den Zeitraum zu verlängern, für den das Getränk einer Person, die dieses konsumiert hat, Energie liefert, wobei die Wärme-Feuchtigkeits-behandelte Stärke hergestellt wird durch Vermischen einer Stärke und von Wasser in einer Menge, um eine Mischung mit einem Wassergehalt zwischen 15 und 35 Gew.-% bereitzustellen, und durch Wärmebehandeln der Mischung bei einer Temperatur zwischen 95 und 130 °C.

2. Verwendung nach Anspruch 1, wobei das Getränk von 5 bis 20 Gew.-% der trockenen Bestandteile an Wärme-Feuchtigkeits-behandelter Stärke enthält.

3. Verwendung nach Anspruch 1 oder 2, wobei die Wärme-Feuchtigkeits-behandelte Stärke hergestellt wird durch eine Wärmebehandlung der Mischung bei einer Temperatur zwischen 100 °C und 110 °C.

4. Verwendung nach Anspruch 3, wobei die Mischung während der Wärmebehandlung mit zwischen 400 und 535 U/min rotiert wird.

5. Verwendung nach Anspruch 3 oder 4, wobei die Mischung außerdem einen Emulgator in einer Menge von 0,2 bis 1% des Trockengewichts der Stärke enthält.

6. Energiegetränk mit verlängerter Wirkung, das mit einer Wärme-Feuchtigkeits-behandelten Stärke angereichert ist, so dass das Getränk vom 1,5 bis 15-fachen an langsam verdaulicher Stärke enthält als üblicherweise in einem nicht-ergänzten Getränk dieses Typs gefunden wird, wobei die Wärme-Feuchtigkeits-behandelte Stärke hergestellt wird durch Vermischung einer Stärke und von Wasser in einer Menge, um eine Mischung mit einem Wassergehalt zwischen 15 und 35 Gew.-% zu erhalten, und durch Wärmebehandeln der Mischung bei einer Temperatur zwischen 95 und 130 °C.

7. Getränk nach Anspruch 6, das ein Sojamilchgetränk, ein gemalztes Getränk, ein Schokoladegetränk, ein Fruchtsaftgetränk, ein Milchgetränk oder eine Mischung davon ist.

## Revendications

1. Utilisation d'un amidon traité par la chaleur humide pour réduire la vitesse de digestibilité d'une boisson de manière à augmenter la période de temps pendant laquelle la boisson fournit de l'énergie à un individu qui l'a consommée, dans laquelle l'amidon traité par la chaleur humide est produit en mélangeant un amidon et de l'eau en une quantité choisie pour donner un mélange ayant une teneur en eau de 15 à 35 % en poids et en soumettant le mélange à un traitement thermique à une température comprise dans l'intervalle de 95 à 130°C.

2. Utilisation suivant la revendication 1, dans laquelle la boisson contient 5 à 20 % en poids des constituants secs de l'amidon traité par la chaleur humide.

3. Utilisation suivant la revendication 1 ou 2, dans laquelle l'amidon traité par la chaleur humide est produit par traitement thermique du mélange à une température comprise dans l'intervalle de 100°C à 110°C.

4. Utilisation suivant la revendication 3, dans laquelle le mélange est soumis à une rotation à une vitesse de 400 à 535 tours par minute au cours du traitement thermique.

5. Utilisation suivant la revendication 3 ou 4, dans laquelle le mélange comprend en outre un émulsionnant en une quantité de 0,2 à 1 % du poids sec de l'amidon.

6. Boisson énergétique à long terme qui est additionnée d'un amidon traité par la chaleur humide de telle sorte que la boisson contienne une quantité d'amidon lentement digestible 1,5 à 15 fois supérieure à celle existant classiquement dans une boisson non additionnée de ce type, dans laquelle l'amidon traité par la chaleur humide est produit en mélangeant un amidon et de l'eau en une quantité choisie pour donner un mélange ayant une teneur en eau de 15 à 35 % en poids et en soumettant le mélange à un traitement thermique à une température comprise dans l'intervalle de 95 à 130°C.

7. Boisson suivant la revendication 6, qui est une boisson à base de lait de soja, une boisson maltée, une boisson au chocolat, une boisson à base de jus de fruit, une boisson lactée ou un de leurs mélanges.
